(19) Europäisches Patentamt / European Patent Office / Office européen des brevets

(11) **EP 2 212 659 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **08847511.6**

(22) Anmeldetag: **10.11.2008**

(51) Int Cl.:
**G01G 3/13** *(2006.01)*      **G01N 27/00** *(2006.01)*

(86) Internationale Anmeldenummer:
**PCT/EP2008/065248**

(87) Internationale Veröffentlichungsnummer:
**WO 2009/060100 (14.05.2009 Gazette 2009/20)**

(54) **IMPEDANZ SCANNENDE QUARZMIKROWAAGE**

IMPEDANCE-SCANNING QUARTZ CRYSTAL MICROBALANCE

MICROBALANCE À QUARTZ À BALAYAGE DE L'IMPÉDANCE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.11.2007 DE 102007053573**

(43) Veröffentlichungstag der Anmeldung:
**04.08.2010 Patentblatt 2010/31**

(73) Patentinhaber: **C3 Prozess- und Analysentechnik GmbH**
**85540 Haar bei München (DE)**

(72) Erfinder:
- **WUDY, Franz**
  **93053 Regensburg (DE)**
- **MULTERER, Michael**
  **96317 Kronach (DE)**
- **SCHMEER, Georg**
  **93080 Pentling/Grossberg (DE)**
- **GORES, Heiner, Jakob**
  **93128 Regenstauf (DE)**

(74) Vertreter: **2s | ip Schramm Schneider Patentanwälte Rechtsanwälte**
**Postfach 86 02 67**
**81629 München (DE)**

(56) Entgegenhaltungen:
**WO-A-2006/118899      WO-A-2006/132451**

- **D.A.BUTTRY, M.D.WARD: "Measurement of interfacial processes at electrode surfaces with the electrochemical quartz crystal microbalance" CHEM.REV., Bd. 92, Nr. 6, 10. Dezember 1992 (1992-12-10), Seiten 1355-1379, XP002518413**
- **J.WEGENER, A.JANSHOFF,C.STREINEM: "The quartz crystal mircobalance as a novel means to study cell-substrate interaction in situ" CELL BIOCHEMESTRY AND BIOPHYSICS, Bd. 34, 2001, Seiten 121-151, XP002518414**

EP 2 212 659 B1

**Beschreibung**

Die Erfindung betrifft ein Verfahren zur Detektion einer Massenänderung mit einer Impedanz scannenden Quarzmikrowaage, sowie eine Einrichtung zur Detektion einer Massenänderung.

Quarzmikrowaagen (QCM) sind aus dem Stand der Technik bekannt, um kleinste Massenänderungen zu detektieren, wie z.B. offenbart in "Measurement of interfacial processes et electrode surfaces with the electrochemical quartz crystal microbalance", Buttry and Ward. Das Herzstück einer Quarzmikrowaage ist ein Schwingquarz, der durch Anlegen einer Wechselspannung zu einer resonanten Schwingung angeregt werden kann. Aufgrund der hohen Güte und der damit verbundenen Frequenzstabilität von Schwingquarzen finden diese in vielen elektronischen Geräten eine Anwendung als Zeitnormal. Quarzmikrowaagen (QCM) finden in den analytischen Sparten der Chemie, Biologie, Elektrochemie und Werkstoffprüfung schon seit geraumer Zeit Anwendung.

Zum ersten Mal hat Günter Sauerbrey im Jahr 1959 den Zusammenhang zwischen Frequenzänderung der Schwingung des Quarzes in Abhängigkeit der Massenbeladung definiert. Die Frequenzänderung ist dabei linear zu Änderung der Massenbeladung des Quarzes.

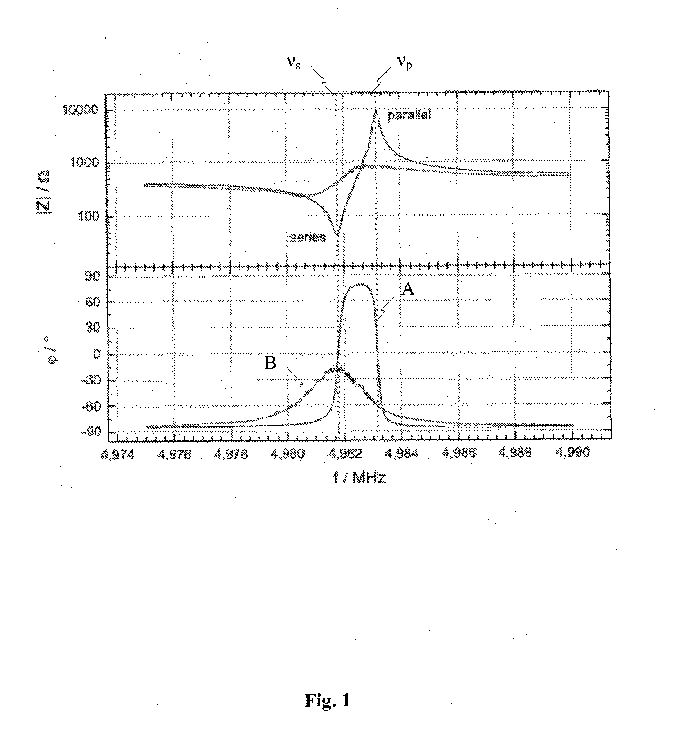

Kommerziell werden grundlegend zwei Typen von Quarzmikrowaage verwendet - zum Einen der Oszillatortyp und zum Anderen der die Impedanz scannende Typ. Die auf dem Oszillatordesign beruhende Quarzmikrowaage besteht schaltungstechnisch aus einem elektronischen Oszillator in freilaufender Konfiguration, wobei der Wägequarz als Frequenz bestimmendes Bauteil verwendet wird. In Fig. 1 ist ein typischer Impedanzverlauf als Bode-Diagramm eines solchen Schwingquarzes dargestellt.

Besonders gut ist dabei der Phasensprung von -90° zu +90° und wieder zurück auf -90° zu erkennen, wenn der Quarz an Luft nahezu unbelastet ist. Der erste Sprung (mit steigender Frequenz) findet bei der so genannten Serienresonanzfrequenz ($v_s$) des Quarzes statt, der zweite Sprung bei der so genannten Parallelresonanzfrequenz ($v_p$). An diesen Stellen weist die Magnitude entweder ein globales Minimum oder ein Maximum auf.

Konventionelle Oszillatorschaltungen, wie sie in den meisten Quarzmikrowaagen zu finden sind, benötigen zur reibungslosen elektronischen Funktion einen Phasensprung durch 0°. Ist der Quarz stark bedämpft, z.B. durch Einbringen in Flüssigkeiten, ist die Dynamik des Phasensprungs stark eingeschränkt - die Quarzmikrowaage funktioniert nicht mehr in trivialer Weise. Erweiterungen zur gesamten Verschiebung der Phasenlage, so dass wieder ein Phasensprung durch 0° stattfindet sind aufwändig und fehlerträchtig.

Die Kompensation der parasitären Kapazität muss zudem häufig manuell durchgeführt werden, was insbesondere für rationelle und automatisierte Messungen nachteilig ist.

Im ungedämpften Falle ist die Resonanzfrequenz, welche durch Frequenzmessgeräte bestimmt wird, durch eine scharfe Änderung im Phasenverhalten nahezu eindeutig definiert (vgl. Fig. 1 Kurve A).

Im gedämpften Fall ist die Steigung des Phasensprungs stark abgeschwächt (vgl. Fig.1 Kurve B), die Lage der Resonanzfrequenzen verliert dabei an Eindeutigkeit. Parasitäre und unvermeidbare Phasenverschiebungen durch den elektronischen Aufbau tragen weiter dazu bei, dass die Frequenzgenauigkeit weiter abnimmt - die Güte des Oszillators ist verringert.

Ein anderer Ansatz ist das Ausmessen des Impedanzverlaufes wie er in Fig. 1 gezeigt ist. Dazu werden komplizierte und genaue elektronische Gerätschaften benötigt. Das können entweder bekannte Netzwerkanalysatoren oder auch spezialisierte Aufbauten sein. Ihnen gemeinsam ist, dass die gewonnenen Informationen, wie etwa Magnitude und Phase in Abhängigkeit der Frequenz in eine analytisch verwertbare Form gebracht werden müssen.

Dazu bedarf es eines mathematischen Modells einer elektronischen Ersatzschaltung, auf welches durch nichtlineare Regression gefittet werden kann. Dazu werden das BVD-Modell (Butterworth van Dyke-Ersatzschaltung eines Schwingquarzes) und seine Abwandlungen herangezogen. Nachteil dieser Methode ist, dass die Messungen sehr langsam verlaufen und zum Teil einige Sekunden pro Messpunkt dauern können. Dies macht in-situ Messungen und Messungen in Echtzeit unmöglich, insbesondere wenn mehrere tausend Messpunkte ausgemessen werden müssen, nicht zuletzt um eine genau aufgelöste Frequenzinformation zu erhalten.

Weiterhin ist das Anpassen (im Folgenden Fitten genannt) auf das BVD-Modell bedingt durch die Methodik der nicht-linearen Approximation sehr unzuverlässig und langsam. Das grundlegende Modell (BVD-Modell) erfährt schon sehr viele Näherungen und Annahmen. Der Verlauf des Fits ist sehr stark von der Start- und Endfrequenz (Frequenzfenster) abhängig. Bei bis zu zehn zu fittenden Parametern und bei bis zu 100.000 Messpunkten ist das ein sehr lange dauernder Prozess. Der Fit konvergiert dabei zum Teil gar nicht oder nur schlecht. Zudem ist die Qualität des Ergebnisses sehr schlecht. Die benötigten Startparameter sind nur sehr schwer abzuschätzen, da kaum experimentell beobachtbare Größen darin stecken. Der positive Verlauf des Fits selbst ist besonders stark von diesen Startparametern abhängig.

Dieses Verfahren stellt also sehr viele interpretierbare elektrische Parameter zur Verfügung ist aber gar nicht oder nur sehr schlecht dazu zu gebrauchen, schnelle in-situ Messungen vorzunehmen.

Aufgabe der Erfindung ist es daher ein Verfahren und eine Vorrichtung zur Detektion einer Massenänderung bereitzustellen, bei denen einerseits die aus dem Stand der Technik bekannten Nachteile zumindest teilweise vermieden werden und andererseits in-situ Messungen und Messungen in Echtzeit möglich sind.

Demnach wird in einem ersten Aspekt der Erfindung ein Verfahren zur Detektion einer Massenänderung mit einer Impedanz scannenden Quarzmikrowaage, welche mit einer Auswerteeinrichtung koppelbar ist bereit gestellt, wobei die Quarzmikrowaage ausgestaltet ist, die mit einer vorbestimmten Datenaufnahmerate aufgenommenen Messpunkte als Rohdaten an die Auswerteeinrichtung zu übertragen, umfassend zumindest folgende, von der Phaseninformation und der Amplitudeninformation der Messpunkte unabhängige Schritte:

- Lineares Anpassen der Messpunkte der Rohdaten auf eine gebrochen rationale Funktion, und
- Bestimmen mindestens einer Resonanzfrequenz aus den angepassten Messpunkten der Rohdaten, wobei eine Änderung der mindestens einen Resonanzfrequenz einer effektiven Massenänderung entspricht.

Der Vorteil der linearen Anpassung liegt darin, dass im Vergleich zur nichtlinearen Anpassung besonders schnelle Messungen, vorzugsweise sogar in Echtzeit, durchführbar sind.

Vorteilhaft ist es, als gebrochen rationale Funktion eine Pade-Approximation aus der Schar der Pade-Approximationen

$$y = \frac{p(\nu)}{1+Q(\nu)} = \frac{A_0 + A_1\nu + A_2\nu^2 + \cdots + A_m\nu^m}{1 + A_{m+1}\nu + A_{m+2}\nu^2 + \cdots + A_{m+n}\nu^n}$$

zu verwenden und mit dem Verfahren der kleinsten Fehlerquadrate, angewandt auf die linearisierte Form

$$y = p(\nu) - Q(\nu) \cdot y$$

der Pade-Approximation, die Koeffizienten der Pade-Approximation zu bestimmen.

Es hat sich als besonders vorteilhaft herausgestellt, die Pade-Approximation

$$y = \frac{p(\nu)}{1+Q(\nu)} = \frac{A_0 + A_1\nu + A_2\nu^2}{1 + A_3\nu + A_4\nu^2 + A_5\nu^3}$$

zu verwenden.

Die Pade-Approximationen und insbesondere die Pade-Approximation der Ordnung (2,3) zeichnen sich in besonders vorteilhafter Weise hinsichtlich Einfachheit, Schnelligkeit und Stabilität aus.

In einer Ausführungsform kann das Bestimmen der mindestens einen Resonanzfrequenz, das Bestimmen eines globalen Maximums und eines globalen Minimums aus den angepassten Messpunkten umfassen, wobei das globale Maximum der Parallelresonanzfrequenz und das globale Minimum der Serienresonanzfrequenz entsprechen.

In einer vorteilhaften Ausführungsform werden die Rohdaten während der Messung an die Auswerteeinrichtung übertragen, wobei das lineare Anpassen der Messpunkte der Rohdaten auf die gebrochen rationale Funktion und das Bestimmen der Resonanzfrequenz während der Messung durchgeführt werden.

Damit kann bereits während der Messung mit der Auswertung der Messung begonnen werden, so dass vorzugsweise sogar eine Messung und Auswertung in Echtzeit möglich ist.

Die Datenaufnahmerate kann mehr als 10.000 Messpunkte pro Sekunde, vorzugsweise mehr als 100.000 Messpunkte pro Sekunde, besonders bevorzugt mehr als 500.000 Messpunkte pro Sekunde betragen.

In einer Ausführungsform kann vor dem linearen Anpassen der Messpunkte der Rohdaten auf eine gebrochen rationale Funktion und dem Bestimmen der Resonanzfrequenz eine Übersichtsmessung durchgeführt werden, wobei anhand der Messpunkte der Übersichtsmessung die Auflösung und der Frequenzbereich für die Messung eingestellt werden können.

Die Bereitstellung einer Übersichtsmessung wird erst durch die besonders hohe Datenaufnahmerate ermöglicht, da die Übersichtsmessung ebenfalls nahezu in Echtzeit erfolgt.

Der ausgemessene Frequenzbereich kann während der Messung dynamisch angepasst werden. Die Rohdaten und die linear angepassten Messpunkte können auf einer Anzeigeeinrichtung dargestellt werden.

In einem weiteren Aspekt der Erfindung wird eine Einrichtung zur Detektion einer Massenänderung, aufweisend eine Impedanz scannende Quarzmikrowaage und eine damit koppelbare Auswerteeinrichtung bereit gestellt, wobei der Schwingquarz Gleichstrom-entkoppelt an die Quarzmikrowaage angebunden ist.

In einer bevorzugten Ausfi.ihrungsform der Einrichtung sind die Messpunkte ohne Phaseninformation und ohne Amplitudeninformation aufnehmbar.. Dies ermöglicht die Bereitstellung von Rohdaten mit sehr hohen Datenaufnahmeraten.

Der Schwingquarz kann einen beschichteten Schwingquarz umfassen, wobei die Beschichtung selektiv absorbierende Medien, insbesondere Polymere umfasst.

Die Datenaufnahmerate der Quarzmikrowaage kann mehr als 10.000 Messpunkte pro Sekunde, vorzugsweise mehr als 100.000 Messpunkte pro Sekunde, besonders bevorzugt mehr als 500.000 Messpunkte pro Sekunde betragen.

In einer Ausgestaltung kann die Quarzmikrowaage zur Steuerung einer Elektroplattierung verwendet werden ist.

Mit der durch die Erfindung bereitgestellten relativ Impedanz scannenden Methode wird ein neuer Weg beschrieben, um die aus dem Stand der Technik bekannten Nachteile zumindest teilweise zu vermeiden. Zwar liefer die Methode keine so hohe Informationsdichte wie die absolute Impedanzmethode, dafür wird aber ein praktisch ebenso gutes Ergebnis bei gleichzeitig deutlicher Steigerung der Datenrate erreicht. Diese Steigerung der Datenrate ist für zahlreiche Anwendungsgebiete in der Elektrochemie, der Gassensorik und Biochemie, wo es wegen der Dynamik auf schnelle Messungen ankommt, von großem Vorteil.

Auf eine Messung der Phase und eine Absolutmessung der Magnitude wird verzichtet, was sich hinsichtlich der Messgeschwindigkeit besonders positiv auswirkt. Bedingt durch diesen Verzicht ist der elektronische Aufbau zudem deutlich kostengünstiger herzustellen als die kommerziell verfügbaren Impedanzanalysierer.

Die Überlegenheit der Impedanz scannenden Methoden ist bekannt. Die aufgeführten Nachteile der hohen Kosten, der geringen Datenrate und der lange Messdauer können durch das erfindungsgemäße Verfahren und die erfindungsgemäße Vorrichtung ausgeräumt werden. Mit der Verwendung eines linearen Fits für die automatisierte Auswertung entfallen das fehlerträchtige Raten von Startparametern und das Problem der oft mangelnden Konvergenz. Da der Rechenaufwand gegenüber einem nichtlinearen Fit ebenfalls deutlich reduziert ist, reicht ein handelsüblicher Computer für die Auswertung der Messdaten.

Die vorgeschlagenen gebrochen rationalen Funktionen (Pade-Approximationen) eignen sich sehr gut zur Anpassung des Impedanzverlaufes. Damit ist mehr als nur die gezählte vermeintliche Resonanzfrequenz der ersten Oszillatormethode zugänglich. Zudem sind die gewonnenen Informationen schnell und zuverlässig verfiigbar.

Zusammengefasst bietet das erfindungsgemäße Verfahren und die erfindungsgemäße Einrichtung zur Detektion einer Massenänderung folgende Vorteile gegenüber dem Stand der Technik:

- Verfahren und Einrichtung sind geeignet für stark bedämpfte Quarze.
- Es ist, keine manuelle Kompensation der parasitären Kapazität (wie bei Oszillatorschaltungen zwingend nötig) notwendig.
- Die Anregungsamplitude ist vom Computer aus einstellbar.
- Verfahren und Einrichtung sind geeignet für Arrays von Quarzen verschiedener Grundfrequenz (Dies ist bei der Oszillatorschaltungen nicht möglich).
- Das Überwachen des Impedanzverlaufs ist während der Messung möglich. Dies erlaubt Rückschlüsse auf Dämpfung und Signalqualität.
- Die Resonanzfrequenz kann mittels Software bzw. mittels eines Softwarealgorithmus bestimmt werden. Die Einrichtung ist so flexibel einsetzbar (durch Anpassen der Software) ohne dass Hardwareänderungen vorgenommen werden müssen.
- Ein kostengünstiger Aufbau mit Standardkomponenten wird ermöglicht.
- Die Einrichtung zeichnet sich durch geringe Abmessungen (160x 100 mm Platine) aus.
- Der Quarzausgang ist DC-entkoppelt für EQCM-Messungen.
- Messeinrichtung und Auswerteeinrichtung sind über ein schnelles USB-Interface mit Massentrennung gekoppelt.
- Eine graphische Steuersoftware zur intuitiven und benutzerfreundlichen Bedienung kann einfach bereitgestellt werden.
- Es sind hohe Messgeschwindigkeiten möglich (Scanraten bis über 500 kS/s).
- Es ist eine hohe Frequenzauflösung von etwa 20 mHz möglich.

Weitere Einzelheiten und Merkmale der Erfindung ergeben sich aus der nachfolgenden Beschreibung in Verbindung mit der Zeichnung. Es zeigt

Fig. 1     Messkurven eines Impedanzscans;

Fig. 2     eine Blockschaltbild einer Ausführungsform einer Quarzmikrowaage;

Fig. 3     ein Beispiel eines Impedanzscans mit einer gefitteten Kurve;

Fig. 4     eine kombinierte Auftragung eines Cyclovoltammogrammes (Ag auf Gold); und

Fig. 5     den linearen Zusammenhang zwischen Ladungsmenge und Resonanzfrequenz aus Fig. 4.

Aufbau einer erfindungsgemäßen Einrichtung

Gegenüber den aus dem Stand der Technik bekannten Messvorrichtungen werden einige entscheidende Änderungen und Vereinfachungen vorgeschlagen. Phaseninformationen werden nicht ausgelesen, was den Aufbau stark vereinfacht. Magnitudeninformationen werden in proprietären, relativen Einheiten aufgenommen. Der Quarz wird komplett DC entkoppelt an das Messgerät angebunden, was elektrochemische Messungen (EQCM) störungsfrei ermöglicht.

Besonders in der Messgeschwindigkeit werden dadurch Maßstäbe gesetzt. So ist das Gerät per USB-Schnittstelle an den Computer angebunden. Die Hardware ist so stark optimiert, dass eine Datenaufnahmerate von mehr als 500.000 Messpunkten pro Sekunde zur Verfügung gestellt werden kann. Eine durchschnittliche Messung von 20 kHz Fensterbreite bei 0,2 Hz Frequenzschritt ist daher innerhalb 200 ms möglich. Die Rohdaten werden im Anschluss daran im Computer ausgewertet. Das ganze Gerät findet sehr Platz sparend und kostengünstig auf einer DIN-Euro Platine Platz.

Werden die Messanforderungen reduziert, etwa wenn nur die Serienresonanzfrequenzen ermittelt werden sollen oder die Frequenzauflösung für die Messungen reduziert wird, kann die Akquisitionszeit nochmals deutlich reduziert werden.

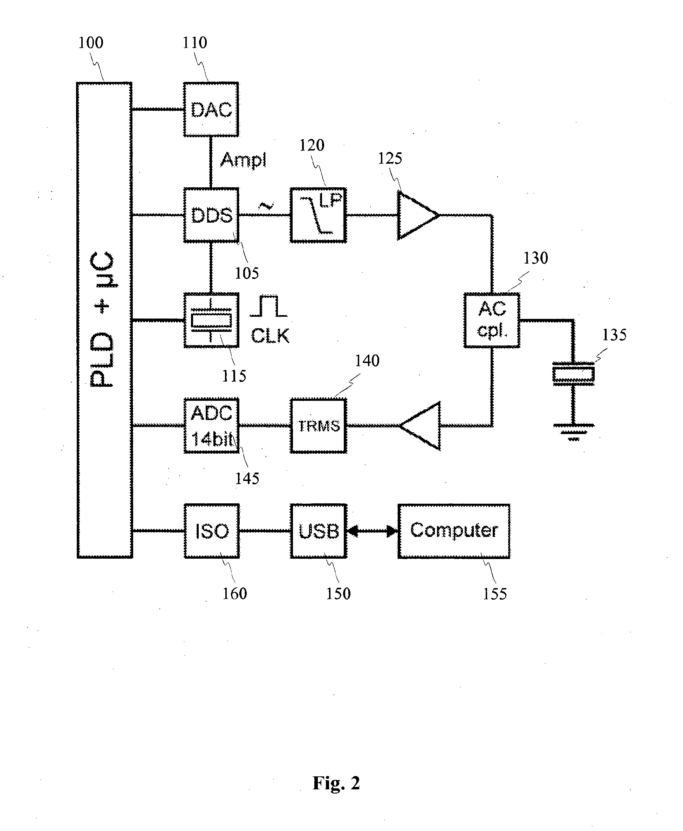

**Fig. 2** zeigt exemplarisch den Aufbau einer Ausführungsform einer Quarzmikrowaage als Blockschaltbild. Wie hieraus ersichtlich ist, stellt ein programmierbarer Logikbaustein PLD (100), ausgeführt als Ein-Chip-Baustein, den Kern der Quarzmikrowaage dar. Der programmierbare Logikbaustein PLD (100) ist mit einem frei programmierbaren DDS-Synthesizer (105) gekoppelt, um den Frequenzhub zu steuern. Der DDS-Synthesizer (105) stellt an seinem Ausgang eine Sinusschwingung bereit. Mit einem einfachen Digital-Analog-Konverter DAC (110) kann die Amplitude des Ausgangssignals zwischen 0,05 und 8,33 $V_{rms}$ in 4096 Schritten eingestellt werden.

Der Logikbaustein PLD (100) und der DDS-Synthesizer (105) werden jeweils mit einer Taktfrequenz von 80 MHz betrieben, wobei der Takt von dem Taktgenerator CLK (115) bereitgestellt wird. Der DDS-Synthesizer (105) ist lastseitig mit einem Tiefpass-Filter LP (120) vierter Ordnung und mit einer Grenzfrequenz von 10 MHz oder 15 MHz gekoppelt. Es können auch Tiefpass-Filter (120) mit größeren Grenzfrequenzen, z.B. 20 MHz, 25 MHz oder mehr eingesetzt werden.

Die so erzeugte Sinusschwingung, deren Frequenz (zwischen 1 MHz und 10 MHz oder 15 MHz) und Amplitude variabel ist, wird mit einem stromrückgekoppelten Operationsverstärker (125) verstärkt. Unter Verwendung eines wechselstromgekoppelten Netzwerkes (130) mittlerer Impedanz wird das Signal in den Quarz (135) eingekoppelt.

Das Signal wird von dem Netzwerk (130) wieder ausgekoppelt und über einen Operationsverstärker einem Frequenz-Spannungswandler (140) zugeführt. Unter Verwendung des Frequenz-Spannungswandlers (140), welcher vorzugsweise als Einzel-Chip ausgeführt ist und linear über den gesamten Frequenzbereich ist, in Kombination mit einem Tiefpass-Filter wird der Logarithmus des Impedanzverhaltens des Quarz (135) ermittelt und einem 14-Bit Analog-Digital-Konverter ADC (145) zugeführt.

Der Logikbaustein PLD (100) nimmt die so ermittelten Daten von dem Analog-Digital-Konverter ADC (145) entgegen und bestimmt an jedem Frequenzschritt über mindestens zwei Messpunkte den arithmetischen Mittelwert und überträgt die Daten an einen USB-Controller (150), welcher die Daten wiederum an einen Computer (155) überträgt. Ein Bus-Isolator ISO (160) verhindert bei der Datenübertragung Koppelungen des USB-Controllers (150) bzw. des USB-Interfaces gegen Masse.

Ein zusätzlicher Mikrocontroller μC führt höherwertige Prozesse aus, wie zum Beispiel das Berechnen von Start- und Stop-Frequenzen, das Berechnen der Frequenzschrittbreite und das Überwachen und Steuern des Logikbausteins PLD (100).

Verfahren und Algorithmus

Ein Laufzeit optimiertes Computerprogramm (welches in der Programmiersprache C geschrieben sein kann), welches auf dem Computer (155) ausgeführt wird, sammelt die an den Computer (155) übertragenen Daten und führt als ersten Schritt einen Integritätscheck aus. Anschließend werden die von der Hardware gewonnenen Daten (als Übersichtsmessung) durch das Computerprogramm für den Benutzer dargestellt.

Nach einer Übersichtsmessung wird dem Benutzer die Möglichkeit zur Verfügung gestellt, die Messauflösung zu erhöhen und die Start- und/oder Stop-Frequenzen anzupassen, so dass eine so genannte "Region of Interest" ROI mit hoher Auflösung gemessen werden kann. Bei Verwendung mehrerer Quarze mit unterschiedlichen Resonanzfrequenzen kann für jeden Quarz die ROI in Abhängigkeit der jeweiligen Resonanzfrequenz definiert werden. Damit lassen sich die Messerwerte verschiedene Quarze voneinander unterscheiden, sodass parallele Messungen mit verschiedenen Quarzen möglich sind.

Anschließend werden die Serien- und Resonanzfrequenzen bestimmt, indem ein linearer Fit zur analytischen Interpretation der Ergebnisse durchgeführt wird. Die Messwerte werden hierzu auf eine gebrochen rationale Funktion, vorzugsweise auf eine Pade-Approximation aus der Schar der Pade-Approximationen (Gleichung 1) angepasst (auch gefittet genannt):

$$ y = \frac{p(\nu)}{1 + Q(\nu)} = \frac{A_0 + A_1\nu + A_2\nu^2 + \cdots + A_m\nu^m}{1 + A_{m+1}\nu + A_{m+2}\nu^2 + \cdots + A_{m+n}\nu^n} \qquad \text{(Gleichung 1)} $$

Als besonders vorteilhaft hat sich erwiesen, die Messwerte auf die Pade-Approximation der Ordnung (2, 3) anzupassen:

$$ y = \frac{p(\nu)}{1 + Q(\nu)} = \frac{A_0 + A_1\nu + A_2\nu^2}{1 + A_3\nu + A_4\nu^2 + A_5\nu^3} \qquad \text{(Gleichung 2)} $$

Diese Padé-Approximation (Gleichung 1 bzw. Gleichung 2) lässt sich linearisieren zu:

$$ y = p(\nu) - Q(\nu) \cdot y \qquad \text{(Gleichung 3)} $$

Aus der Gleichung 3 werden dann mit Hilfe des Verfahrens der kleinsten Fehlerquadrate die Koeffizienten der Gleichung 2 bestimmt. Im Anschluss daran werden das Minimum $v_s$ und das Maximum $v_p$ ermittelt, wobei $v_s$ die Serienresonanzfrequenz und $v_p$ die Parallelresonanzfrequenz ist.

Es hat sich gezeigt, dass eine gebrochen rationale Funktion besonders gute Ergebnisse bezüglich des Residualverhaltens aufzeigt.

So vermag z.B. die Funktion aus Gleichung 2 Einfachheit, Schnelligkeit und Stabilität auf sich zu vereinen. Da eine lineare Methode verwendet wird, werden keine Startparameter benötigt. Der Fit konvergiert immer und läuft im Gegensatz zu nicht-linearen Methoden immer mit der gleichen Geschwindigkeit, was eine gleich bleibende Datenrate zur Folge hat.

Versuche mit einem typischen Computersystemen haben gezeigt, dass ein Fit mit 100.000 Datensätzen in etwa 12 ms abläuft. Minimum ($v_s$) und Maximum ($v_p$) werden daraus durch Bildung der entsprechenden Ableitungen bestimmt. Die Parameter und der zugehörige Fehler des Fits werden aufgezeichnet. Ein reduzierter Güteparameter $\hat{Q}$ : = $v_p$ / $v_s$ gibt Auskunft über die Breite des interessierenden Bereiches, der "Region of Interest" (ROI) und ermöglicht weitere analytische Abschätzungen.

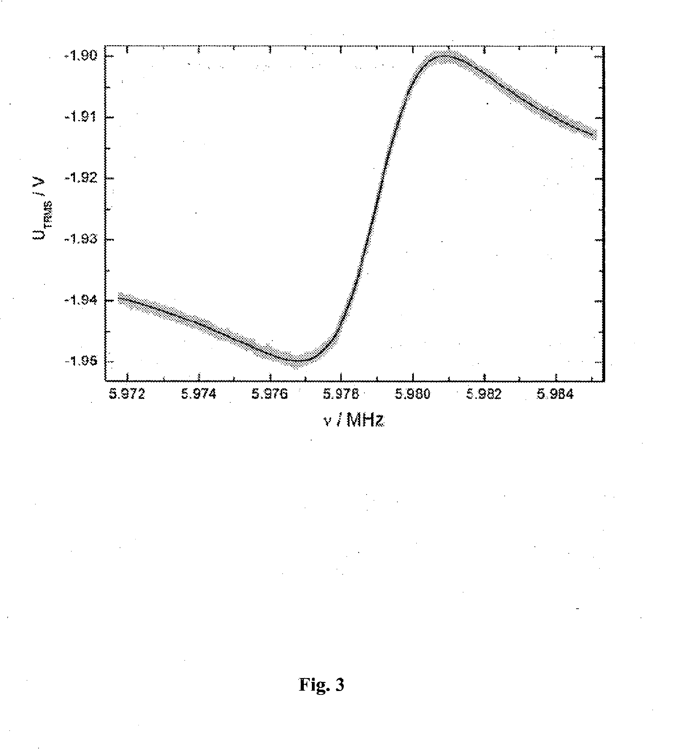

Fig. 3 zeigt ein Beispiel eines Impedanzscans und einer Kurve, welche anhand der Gleichung 3 linear gefittet wurde. In diesem Beispiel wurde für den Fit eine statistische Signifikanz von $\chi^2 = 1 \times 10^{-7}$ berechnet. Zusätzlich wurde ein weiterer nicht-linearer Fit entsprechend der Gleichung 2 durchgeführt, wobei die Parameter des linearen Fits verwendet wurden.

Es hat sich herausgestellt, dass $\chi^2$ beider Fits um maximal 6% voneinander abweichen.

Ein Vergleich des linearen Fits mit dem nicht-linearen Fit zeigt, dass die Abweichung der Frequenzen im Promille-Bereich liegt und statistisch über die gesamte Messdauer verteilt ist. Der erhebliche Zeitvorteil der linearen Methode bei der Durchführung von Messungen gegenüber der nicht-linearen Methode überwiegt gegenüber den vernachlässigbaren Fehlern der linearen Methode.

Im Folgenden wird am Beispiel der Abscheidung (Elektroplattierung) von Silber die Anwendung der erfindungsgemäßen Einrichtung und des Verfahrens gezeigt.

Verwendet wird eine Lösung aus 0,15 M $AgNO_3$ und 1 M $KNO_3$, angesäuert mit $HNO_3$. Als Zelle findet eine Eigenkonstruktion mit einem 0,55 Zoll Quarz im Boden der Zelle Verwendung. Bei dem Quarz handelt es sich um einen kommerziell erhältlichen, Gold bedampften Quarz mit einer Grundresonanzfrequenz von 6 MHz. Als Referenzelektrode dient ein in die Lösung eingetauchter Silberdraht, als Gegenelektrode eine Pt-Ringelektrode. Die Elektroplattierung erfolgt mit einem Potentiostaten in typischer 3-Elektrodenanordnung. Das Potential wird entsprechend der CV-Versuchsführung linear zwischen einem Startwert von + 0,05 V vs Ref. und einem Endwert von - 0,30 V vs Ref. mit einer Vorschubgeschwindigkeit von 10 mV/s geändert.

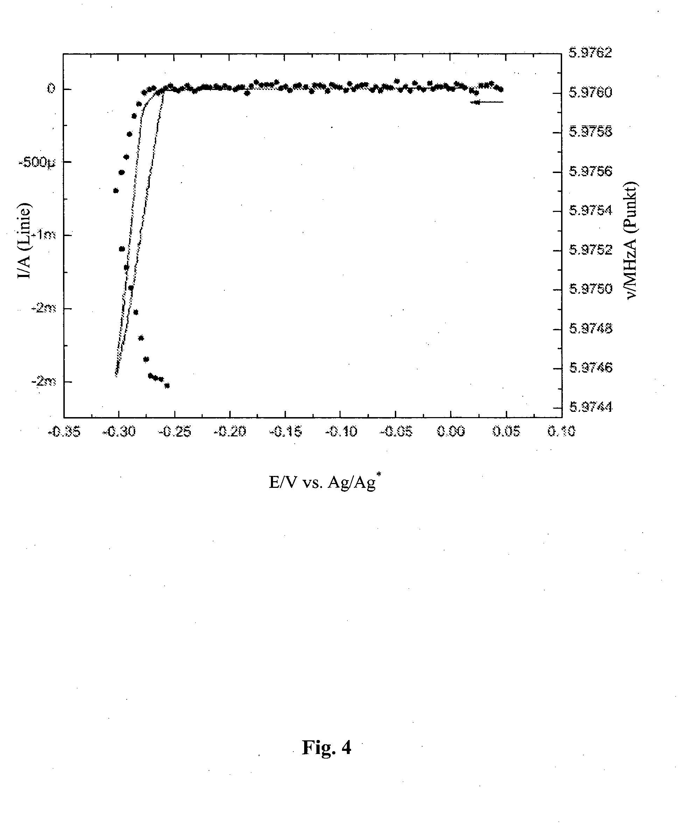

In **Fig. 4** ist eine kombinierte Auftragung eines Cyclovoltammogrammes in kathodischer Richtung mit der Resonanzfrequenz des Quarzes ersichtlich. Bis zu einem Potential von - 0.26 V vs Ref. ist keine Änderung des Stromes ersichtlich, die Resonanzfrequenz bleibt erwartungsgemäß im Rahmen der Messgenauigkeit konstant.

Mit Beginn der Abscheidung, ersichtlich durch den kathodischen Strom bis zu -2 mA, sinkt die Resonanzfrequenz um etwa 1500 Hz, was eine effektive Massenzunahme bedeutet.

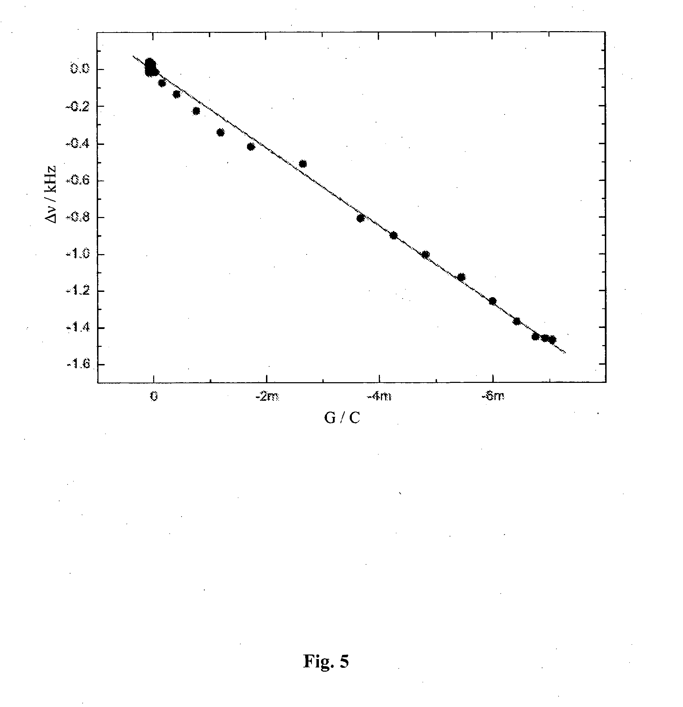

**Fig. 5** zeigt die Änderung der Resonanzfrequenz in Zusammenhang mit der Ladungsmenge Q. Die Ladungsmenge wird durch numerische Integration des Stromes über die Zeit bestimmt. Gemäß dem Gesetz nach Faraday erwartet man eine Massenzunahme $\Delta m = Q/M$ wobei M die molare Masse von Silber (107,9 g/mol) ist. Analog gilt das Gesetz nach Sauerbrey $\Delta v = - C \Delta m$ als Empfindlichkeitsparameter.

Die Auftragung $\Delta v$ gegen $Q$ in Fig. 5 zeigt den erwarteten linearen Zusammenhang. Das Residualverhalten beim Fit beläuft sich auf ein $\chi^2$ im Bereich von $10^{-8}$ bis $10^{-6}$; es kann dabei also eine sehr gute Anpassung erreicht werden.

Durch die Erfindung wird also bereitgestellt:

Eine die Impedanz scannende (E)QCM, gekoppelt mit einem auswertenden Rechnersystem, das die Rohdaten linear auf eine gebrochen rationale Funktion anpasst.

Vorzugsweise kommt dabei die Funktion

$$y = \frac{A_0 + A_1 v + A_2 v^2}{1 + A_3 v + A_4 v^2 + A_5 v^3}$$

zum Einsatz.

In einer Ausführungsform der Erfindung kann der verwendete Fit im Verlauf der Messung durchgeführt werden, was die Anwendung der die Impedanz scannende Methode in-situ ermöglicht, vorzugsweise mit einer Datenrate größer als 2 Messungen pro Sekunde bei einer Messdatendichte von größer 1000 Punkten.

Der zu messende Frequenzbereich wird vorzugsweise aus den Ergebnissen des letzten Fits während der Messung dynamisch angepasst.

Die (E)QCM ist vorzugsweise herstellungskostenoptimiert, was durch die Reduzierung des elektronischen Schaltungsaufwands auf ein Minimum und durch den Verzicht auf eine absolute Bestimmung der Magnitudeninformation bewerkstelligt wird.

Die Herstellungskostenoptimierung der (E)QCM kann in einer Ausführungsform durch die Reduzierung des elektronischen Schaltungsaufwands auf ein Minimum durch den vollkommenen Verzicht auf die Phaseninformation bewerkstelligt werden.

Die Herstellungskostenoptimierung der (E)QCM kann in einer Ausführungsform durch die Reduzierung des elektronischen Schaltungsaufwands auf ein Minimum durch Software gestützte Auswertung außerhalb des Gerätes bewerkstelligt werden, was zusätzlich eine Flexibilisierung des Gesamtsystems bedeutet.

In einer vorteilhaften Ausführungsform der QCM und der EQCM können stark bedämpfte Systeme automatisiert gemessen werden.

Vorzugsweise können beschichtete Quarze eingesetzt werden können, die eine Analyse der Gasphase ermöglichen. Als Beschichtung sind alle selektiv absorbierenden Medien denkbar, darunter Polymere, die elektrochemisch aufgebracht werden können, ionische Fluide mit kleinem Dampfdruck, die direkt appliziert werden können und die wie die Polymere eine große strukturelle Variationsmöglichkeit aufweisen, so dass die Adsorption für Komponenten der Gasphase selektiv gestaltet werden kann.

In einer vorteilhaften Ausführungsform kann eine Elektroplattierung (galvanische Abscheidungen) im Betrieb gesteuert werden und zur kontinuierlichen Untersuchung der Abscheidungsbedingungen eingesetzt werden.

In einer besonders vorteilhaften Ausgestaltung weist die Quarzmikrowaage Abmessungen von kleiner 722 cm$^3$ auf, was Messungen in Handschuhkästen ermöglicht.

**Patentansprüche**

1. Verfahren zur Detektion einer Massenänderung mit einer Impedanz scannenden Quarzmikrowaage, welche so mit einer Auswerteeinrichtung koppelbar ist, dass der Quarz Gleichstrom-entkoppelt an die Auswerteeinrichtung angebunden ist, **dadurch gekennzeichnet dass** die Quarzmikrowaage ausgestaltet ist, die mit einer vorbestimmten Datenaufnahmerate aufgenommenen Messpunkte als Rohdaten an die Auswerteeinrichtung zu übertragen, umfassend zumindest folgende, von der Phaseninformation und der Amplitudeninformation der Messpunkte unabhängige Schritte:

- Lineares Anpassen der Messpunkte der Rohdaten auf eine gebrochen rationale Funktion, und
- Bestimmen mindestens einer Resonanzfrequenz aus den angepassten Messpunkten der Rohdaten, wobei eine Änderung der mindestens einen Resonanzfrequenz einer effektiven Massenänderung entspricht.

2. Verfahren nach Anspruch 1, wobei als gebrochen rationale Funktion eine Pade-Approximation aus der Schar der Pade-Approximationen

$$y = \frac{p(v)}{1+Q(v)} = \frac{A_0 + A_1 v + A_2 v^2 + \cdots + A_m v^m}{1 + A_{m+1} v + A_{m+2} v^2 + \cdots + A_{m+n} v^n}$$

verwendet wird und mit dem Verfahren der kleinsten Fehlerquadrate, angewandt auf die linearisierte Form

$$y = p(v) - Q(v) \cdot y$$

der Pade-Approximation, die Koeffizienten der Pade-Approximation bestimmt werden.

3. Verfahren nach Anspruch 2, wobei die Pade-Approximation

$$y = \frac{p(v)}{1+Q(v)} = \frac{A_0 + A_1 v + A_2 v^2}{1 + A_3 v + A_4 v^2 + A_5 v^3} \cdot$$

verwendet wird.

4. Verfahren nach einem der Ansprüche 1 bis 3, wobei das Bestimmen der mindestens einen Resonanzfrequenz, das Bestimmen eines globalen Maximums und eines globalen Minimums aus den angepassten Messpunkten umfasst, wobei das globale Maximum der Parallelresonanzfrequenz und das globale Minimum der Serienresonanzfrequenz entsprechen.

5. Verfahren nach einem der vorhergehenden Ansprüche, wobei die Rohdaten während der Messung an die Auswerteeinrichtung übertragen werden und wobei das lineare Anpassen der Messpunkte der Rohdaten auf die gebrochen rationale Funktion und das Bestimmen der Resonanzfrequenz während der Messung durchgeführt werden.

6. Verfahren nach einem der vorhergehenden Ansprüche, wobei die Datenaufnahmerate mehr als 10.000 Messpunkte pro Sekunde, vorzugsweise mehr als 100.000 Messpunkte pro Sekunde, besonders bevorzugt mehr als 500.000 Messpunkte pro Sekunde beträgt.

7. Verfahren nach einem der vorhergehenden Ansprüche, wobei vor dem linearen Anpassen der Messpunkte der Rohdaten auf eine gebrochen rationale Funktion und dem Bestimmen der Resonanzfrequenz eine Übersichtsmessung durchgeführt wird und wobei anhand der Messpunkte der Übersichtsmessung die Auflösung und der Frequenzbereich für die Messung eingestellt werden.

8. Verfahren nach Anspruch 7, wobei der ausgemessene Frequenzbereich während der Messung dynamisch anpassbar ist.

9. Verfahren nach einem der vorhergehenden Ansprüche, wobei die Rohdaten und die linear angepassten Messpunkte auf einer Anzeigeeinrichtung dargestellt werden.

10. Einrichtung zur Detektion einer Massenänderung, aufweisend eine Impedanz scannende Quarzmikrowaage und eine damit koppelbare Auswerteeinrichtung, wobei der Schwingquarz Gleichstrom-entkoppelt an die Auswerteeinrichtung angebunden ist, **dadurch gekennzeichnet dass** diese derart ausgestaltet ist, dass die Messpunkte ohne Phaseninformation und ohne Amplitudeninformation aufnehmbar und linear auf eine gebrochen rationale Funktion anpassbar sind.

11. Einrichtung nach Anspruch 10, wobei der Schwingquarz einen beschichteten Schwingquarz umfasst.

12. Einrichtung nach Anspruch 11, wobei die Beschichtung selektiv absorbierende Medien, insbesondere Polymere umfasst.

13. Einrichtung nach einem der Ansprüche 10 bis 12, wobei die Datenaufnahmerate der Quarzmikrowaage mehr als 10.000 Messpunkte pro Sekunde, vorzugsweise mehr als 100.000 Messpunkte pro Sekunde, besonders bevorzugt mehr als 500.000 Messpunkte pro Sekunde beträgt.

**14.** Einrichtung nach einem der Ansprüche 10 bis 13, wobei diese zur Steuerung einer Elektroplattierung ausgestaltet ist.

**Claims**

**1.** A method of detecting a mass variation using an impedance scanning quartz microbalance which may be coupled to an evaluation device in such a way that the quartz is connected to the evaluation device in a direct-current decoupled manner, **characterised in that** the quartz microbalance is configured for transmitting the measurement points recorded with a predefined data acquisition rate as raw data to the evaluation device, said method including at least the following steps independent from the phase information and the amplitude information of the measurement points:

- linearly adapting the measurement points of the raw data to a fractional-rational function, and
- determining at least one resonant frequency from the adapted measurement points of the raw data, where a variation of the at least one resonance frequency does correspond to an effective mass variation.

**2.** The method as claimed in claim 1, wherein the fractional-rational function used is a Padé approximant from the family of Padé approximants

$$y = \frac{p(v)}{1+Q(v)} = \frac{A_0 + A_1 v + A_2 v^2 + \cdots + A_m v^m}{1 + A_{m+1} v + A_{m+2} v^2 + \cdots + A_{m+n} v^n}$$

and wherein the least square error method as applied to the linearised form

$$y = p(v) - Q(v) \cdot y$$

of the Padé approximant is used to determine the coefficients of the Padé approximant.

**3.** The method as claimed in claim 2, wherein the Padé approximant

$$y = \frac{p(v)}{1+Q(v)} = \frac{A_0 + A_1 v + A_2 v^2}{1 + A_3 v + A_4 v^2 + A_5 v^3}$$

is used.

**4.** The method as claimed in any one of claims 1 to 3, wherein determining the at least one resonant frequency comprises determining a global maximum and a global minimum from the adapted measurement points, wherein the global maximum corresponds to the parallel resonant frequency and the global minimum corresponds to the series resonant frequency.

**5.** The method as claimed in any of the preceding claims, wherein the raw data are transmitted to the evaluation device during the measurement and wherein the linear adaptation of the measurement points of the raw data to the fractional-rational function and the determining of the resonant frequency are performed during the measurement.

**6.** The method as claimed in any of the preceding claims, wherein the data acquisition rate is more than 10,000 measurement points per second, preferably more than 100,000 measurement points per second, and in a particularly preferred manner more than 500,000 measurement points per second.

7. The method as claimed in any of the preceding claims, wherein prior to the linear adaptation of the measurement points of the raw data to a fractional-rational function and the determining of the resonant frequency, a screening measurement is performed and wherein the resolution and the frequency range for the measurement are set on the basis of the measurement points obtained from the screening measurement.

8. The method as claimed in claim 7, wherein the measured frequency range is dynamically adaptable during the measurement.

9. The method as claimed in any of the preceding claims, wherein the raw data and the linearly adapted measurement points are represented on a display device.

10. An apparatus for detecting a mass variation, comprising an impedance scanning quartz microbalance and an evaluation device which may be coupled thereto whereas the oscillating crystal is connected to the evaluation device in a direct-current decoupled manner, **characterised in that** the latter is configured such that the measurement points can be recorded without phase information and without amplitude information and may be adapted linearly to a fractional-rational function.

11. The apparatus as claimed in claim 10, wherein the oscillating crystal comprises a coated oscillating crystal.

12. The apparatus as claimed in claim 11, wherein the coating comprises selectively absorbing media, in particular polymers.

13. The apparatus as claimed in any one of claims 10 to 12, wherein the data acquisition rate of the quartz microbalance is more than 10,000 measurement points per second, preferably more than 100,000 measurement points per second, and in a particularly preferred manner more than 500,000 measurement points per second.

14. The apparatus as claimed in any one of claims 10 to 13, wherein said apparatus is configured for controlling an electroplating process.

**Revendications**

1. Procédé destiné à détecter une variation de masse au moyen d'une microbalance à quartz à balayage de l'impédance laquelle peut être accouplée à un dispositif d'évaluation de telle sorte que le quartz est relié au dispositif d'évaluation tout en étant découplé du courant continu, **caractérisé en ce que** la microbalance à quartz est conçue pour transmettre audit dispositif d'évaluation les points de mesure recueillis avec une vitesse de collecte des données prédéfinie en tant que données brutes, et comprenant au moins les étapes suivantes, lesquelles étant indépendantes de l'information de phase et de l'information d'amplitude des points de mesure:

- l'adaptation linéaire des points de mesure des données brutes selon une fonction rationnelle fractionnaire et
- la détermination d'au moins une fréquence de résonance à partir des points de mesure des données brutes adaptés, une variation de ladite au moins une fréquence de résonance correspondant à une variation de masse effective.

2. Procédé selon la revendication 1 dans lequel un approximant de Padé choisi parmi la famille des approximants de Padé est utilisé comme fonction rationnelle fractionnaire

$$y = \frac{p(v)}{1 + Q(v)} = \frac{A_0 + A_1 v + A_2 v^2 + \cdots + A_m v^m}{1 + A_{m+1} v + A_{m+2} v^2 + \cdots + A_{m+n} v^n}$$

et la méthode des moindres carrés appliquée à la forme linéarisée

$$y = p(v) - Q(v) \cdot y$$

de l'approximant de Padé est utilisée afin de déterminer les coefficients de l'approximant de Padé.

3. Procédé selon la revendication 2 dans lequel l'approximant de Padé

$$y = \frac{p(v)}{1 + Q(v)} = \frac{A_0 + A_1 v + A_2 v^2}{1 + A_3 v + A_4 v^2 + A_5 v^3} \; .$$

est utilisé.

4. Procédé selon l'une quelconque des revendications 1 à 3 dans lequel la détermination de ladite au moins une fréquence de résonance comprend la détermination d'un maximum global et d'un minimum global à partir des points de mesure adaptés, le maximum global correspondant à la fréquence de résonance parallèle et le minimum global correspondant à la fréquence de résonance série.

5. Procédé selon l'une quelconque des revendications précédentes dans lequel les données brutes sont transmises au dispositif d'évaluation pendant la mesure et dans lequel l'adaptation linéaire des points de mesure des données brutes selon la fonction rationnelle fractionnaire ainsi que la détermination de la fréquence de résonance sont effectuées pendant la mesure.

6. Procédé selon l'une quelconque des revendications précédentes dans lequel la vitesse de collecte des données comprend plus de 10 000 points de mesure par seconde, de préférence plus de 100 000 points de mesure par seconde, de manière privilégiée plus de 500 000 points de mesure par seconde.

7. Procédé selon l'une quelconque des revendications précédentes dans lequel une mesure d'orientation est effectuée avant l'adaptation linéaire des points de mesure des données brutes selon une fonction rationnelle fractionnaire et avant la détermination de la fréquence de résonance et dans lequel la résolution et la gamme de fréquence sont réglées pour la mesure à l'aide des points de mesure obtenus lors de la mesure d'orientation.

8. Procédé selon la revendication 7 dans lequel la gamme de fréquence mesurée peut être adaptée de manière dynamique pendant la mesure.

9. Procédé selon l'une quelconque des revendications précédentes dans lequel les données brutes et les points de mesure adaptés de manière linéaire sont représentés sur un dispositif d'affichage.

10. Dispositif destiné à détecter une variation de masse lequel présente une microbalance à quartz à balayage de l'impédance et un dispositif d'évaluation pouvant être accouplé à celle-ci, le quartz piézoélectrique étant relié au dispositif d'évaluation tout en étant découplé du courant continu, **caractérisé en ce que** ledit dispositif est conçu de telle sorte que les points de mesure peuvent être saisis sans information de phase et sans information d'amplitude et peuvent être adaptés de manière linéaire selon une fonction rationnelle fractionnaire.

11. Dispositif selon la revendication 10 dans lequel le quartz piézoélectrique comprend un quartz piézoélectrique revêtu.

12. Dispositif selon la revendication 11 dans lequel le revêtement comprend des milieux à absorption sélective, en particulier des polymères.

13. Dispositif selon l'une quelconque des revendications 10 à 12 dans lequel la vitesse de collecte des données de la microbalance à quartz comprend plus de 10 000 points de mesure par seconde, de préférence plus de 100 000 points de mesure par seconde, de manière privilégiée plus de 500 000 points de mesure par seconde.

14. Dispositif selon l'une quelconque des revendications 10 à 13 dans lequel ledit dispositif est conçu pour commander un placage électrolytique.

**Fig. 1**

**Fig. 2**

**Fig. 3**

Fig. 4

**Fig. 5**